# FASCICULE DE BREVET EUROPEEN

(11) **EP 2 711 069 B1**
(45) Date de publication et mention de la délivrance du brevet: **18.11.2015**
(21) Numéro de dépôt: 13185309.5
(22) Date de dépôt: 20.09.2013
(51) Int. Cl.: B01D 53/83, B01D 53/34, B03C 3/00, F01K 3/20, F23J 15/00

(54) **PROCÉDÉ ET INSTALLATION D'ÉPURATION DE FUMÉES ET DE PRODUCTION D'ÉLECTRICITÉ**
VERFAHREN UND ANLAGE ZUR REINIGUNG VON RAUCHGASEN UND STROMERZEUGUNG
PROCESS AND PLANT FOR FLUE GAS PURIFICATION AND ELECTRICITY GENERATION

(30) Priorité: 20.09.2012 FR 1258814
(43) Date de publication de la demande: 26.03.2014
(73) Titulaire: LAB SA, 69007 Lyon (FR)
(72) Inventeur: Siret, Bernard, 69200 Vénissieux (FR); Tabaries, Franck, 83190 Ollioules (FR)
(74) Mandataire: Grand, Guillaume

(56) Documents cités:
- EP-A1- 2 371 444
- EP-A1- 2 397 214
- JP-A- H0 868 528
- US-A- 4 865 828
- US-A1- 2011 061 528

## Description

La présente invention concerne un procédé et une installation d'épuration de fumées et de production d'électricité.

L'invention s'intéresse en particulier à l'épuration de fumées issues de la combustion de déchets ou de combustibles fossiles, utilisant un filtre à manches ou un électrofiltre.

L'incinération des déchets, tout comme la génération d'énergie par la combustion de combustibles fossiles, présentent un intérêt majeur pour les sociétés modernes. Dans les deux cas, le processus de combustion génère des fumées qui sont trop chargées en polluants pour pouvoir être rejetées dans l'atmosphère sans traitement. Ces fumées contiennent en particulier des oxydes de soufre SO₂ et SO₃, des acides halogénés HCl, des poussières, des métaux lourds et des composés organiques toxiques, ainsi que des oxydes d'azote.

Plusieurs technologies sont actuellement utilisées pour épurer les fumées de ces polluants.

Ainsi, les systèmes humides, dans lesquels les fumées à traiter sont mises en contact avec un liquide neutralisant, occupent une place de choix pour les centrales de production d'énergie. Ces procédés sont très efficaces mais coûteux en investissement. De plus, ils génèrent un rejet aqueux qu'il faut traiter et, même après traitement, le rejet à l'environnement n'est pas toujours possible, par exemple si aucun cours d'eau majeur ou bord de mer n'est à proximité.

Dans les procédés semi-humides, une bouillie liquide chargée en réactif de neutralisation est pulvérisée dans une tour d'atomisation, le résidu sec de la réaction, ainsi que les autres solides étant récupérés sur un filtre à manches ou un électrofiltre. Ces procédés semi-humides évitent le rejet d'eau, sont efficaces, mais, comme il faut que les fumées aient une température assez élevée pour permettre le processus d'atomisation, la récupération énergétique est limitée. La production d'énergie n'est pas aussi poussée qu'elle pourrait l'être. De plus, les réacteurs d'atomisation sont volumineux et occupent une grande place au sol. Enfin, l'utilisation de ces réacteurs nécessite la préparation d'un réactif alcalin sous forme de suspension liquide, tel qu'un lait de chaux, et cette préparation nécessite tout un dispositif complémentaire.

Dans les procédés secs, les fumées à traiter sont mises en contact avec un réactif pulvérulent, comme de la chaux, de la magnésie ou du bicarbonate de sodium, qui est introduit sec et qui va réagir avec les polluants acides des fumées, les produits de réaction, ainsi que les autres solides étant collectés sur un filtre à manches ou dans un électrofiltre. Ces procédés secs sont efficaces et relativement peu coûteux en investissement. Pour être économique et efficace, on doit limiter autant que faire se peut la consommation de réactif pour deux raisons : le coût du réactif lui-même et les coûts de retraitement, stabilisation et/ou mise en décharge des résidus générés. Le ratio stoechiométrique, ratio de la quantité effectivement nécessaire à la quantité théorique dictée par la chimie, donne une mesure de la performance économique du procédé. La minimisation de ce ratio stoechiométrique peut passer par plusieurs voies, parmi lesquelles on peut lister le recyclage des résidus, une opération à une température faible, un écart faible par rapport à la température dite de rosée acide qui est la température en deçà de laquelle les premières gouttes de rosée liquide apparaissent, une opération avec plusieurs filtres étagés, ou encore une humidification du réactif. Ces diverses voies sont présentées, entre autres, dans les documents WO 2004/026443, US 4 454 102, US 6 508 994, EP 2 371 444, EP 2 397 214, EP 1 716 910 et EP 1 493 481. Ainsi, EP-A-2 371 444, qui peut être considéré comme l'état de la technique le plus proche de l'objet de la revendication 1 annexée, divulgue un procédé d'épuration de fumées, dans lequel des fumées à épurer sont envoyées successivement dans un échangeur de chaleur, qui refroidit ces fumées à une température comprise entre 5°C et 40°C et qui produit un flux de vapeur d'eau, et puis dans un séparateur gaz-solides, et dans lequel une fraction du flux de vapeur d'eau est envoyée vers un réacteur d'activation qui est alimenté par une fraction recirculée de résidus solides collectés par le séparateur gaz-solides.

Chacune de ces solutions de mise en oeuvre de procédés secs est éprouvée, mais possède ses inconvénients propres. Ainsi, une opération avec plusieurs filtres en étage coûte en complexité et en investissement. Quant à l'humidification des résidus recirculés, elle donne vite naissance à des problèmes de bourrage et de mottage. Et l'abaissement seul de la température ne suffit pas à faire descendre suffisamment les stoechiométries pour répondre aux exigences du marché.

Enfin, il faut noter qu'un ventilateur est systématiquement utilisé dans les installations de mise en oeuvre des procédés secs, afin de mouvoir les fumées. Un tel ventilateur de tirage est un gros consommateur d'électricité. De même, les diverses opérations de convoyage et de recirculation des solides, ainsi que le séparateur gaz-solides, tel qu'un électrofiltre ou un filtre à manches, son instrumentation et ses annexes utilisent également de l'énergie électrique.

Enfin, il arrive que l'unité d'où proviennent les fumées à traiter produise de l'électricité, notamment par turbinage, mais ce n'est pas toujours le cas et l'énergie produite, par exemple par le processus de combustion, n'est pas toujours complètement valorisée, le cas échéant sous forme de vapeur ou d'eau chaude. Dans tous ces cas, pour assurer son fonctionnement, l'installation d'épuration des fumées doit acheter son électricité.

Le but de la présente invention est de proposer un procédé intégrant de manière performante une épuration de fumées et une production d'électricité.

A cet effet, l'invention a pour objet un procédé d'épuration de fumées et de production d'électricité, tel que défini à la revendication 1.

Ainsi, l'invention utilise la chaleur résiduelle des fumées à traiter, pour produire sa propre électricité par un générateur autonome utilisant un cycle de Rankine à fluide organique. Le rendement énergétique global de l'installation de mise en oeuvre du procédé conforme à l'invention est ainsi significativement amélioré, tout en optimisant l'épuration des fumées à traiter, comme expliqué plus en détail par la suite.

Des caractéristiques additionnelles avantageuses du procédé conforme à l'invention sont spécifiées aux revendications 2 à 9.

L'invention a également pour objet une installation d'épuration de fumées et production d'électricité, telle que définie à la revendication 10.

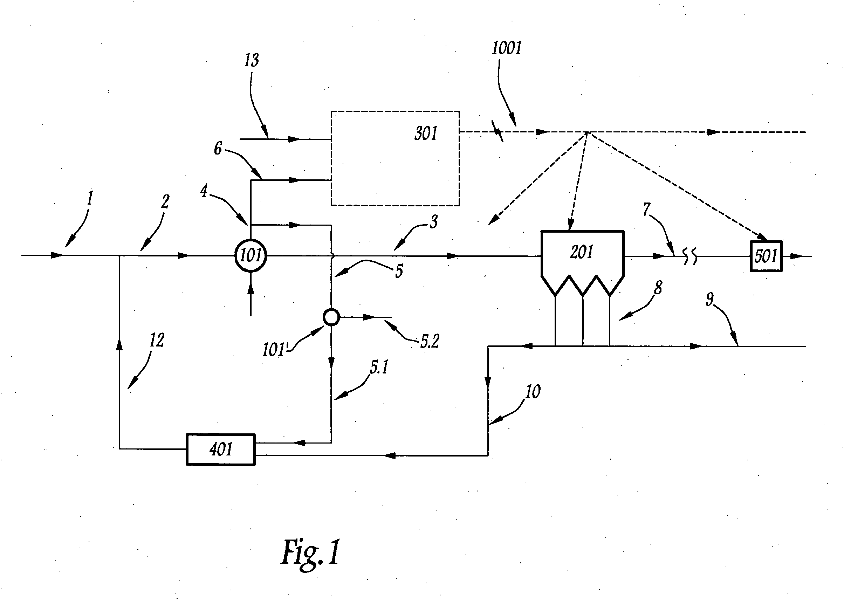

L'invention sera mieux comprise à la lecture de la description qui va suivre, donnée uniquement à titre d'exemple et faite en se référant à l'unique figure 1 qui est un schéma d'une installation conforme à l'invention.

Dans l'installation montrée à la figure 1, des fumées 1 proviennent d'une unité de combustion, non représentée. Cette unité de combustion peut être, de manière non limitative, une unité de combustion de déchets industriels ou ménagers, ou bien une unité produisant de l'énergie par combustion d'un combustible fossile.

Après avoir été mélangées à un flux 12 qui sera détaillé plus loin, en formant un flux mélangé 2, les fumées 1 sont introduites dans un échangeur de chaleur 101 qui, ainsi placé sur le cheminement des fumées, est prévu pour produire de l'eau surchauffée et/ou de la vapeur d'eau sous forme d'un flux référencé 4. L'échangeur 101 est d'une technologie connue en soi : il est par exemple constitué d'un faisceau de tubes lisses ou ailetées, situé à l'intérieur de la gaine de cheminement des fumées. A titre de variante non représentée, le flux 12 est mélangé aux fumées 3 sortant de l'échangeur 101.

Comme conséquence de la production du flux d'eau surchauffée et/ou de vapeur 4, l'échangeur 101 abaisse la température des fumées sortantes 3. Selon une des caractéristiques de l'invention, cet abaissement de température des fumées est d'au moins 20°C et d'au plus 100°C : autrement dit, la température des fumées 2, entrant dans l'échangeur 101, est supérieure de 20°C à 100°C à celle des fumées refroidies 3.

Les fumées refroidies 3, qui contiennent un réactif de neutralisation, sont ensuite admises dans un séparateur gaz-solides 201. En pratique, ce réactif de neutralisation provient du flux 12, qui sera détaillé plus loin, et/ou d'un flux dédié, non représenté sur la figure, introduit directement dans la gaine de cheminement des fumées. Ce réactif de neutralisation, destiné à réagir avec les polluants des fumées, est par exemple de la chaux hydratée, de la magnésie ou du bicarbonate de sodium, cette liste n'étant pas limitative. Quant au séparateur gaz-solides 201, il est préférentiellement un filtre à manches, mais peut également être constitué par un électrofiltre.

Les fumées 7 extraites du séparateur gaz-solides 201 sont ainsi épurées et peuvent être rejetées à l'atmosphère par une cheminée, non représentée sur la figure, ou bien être soumises à d'autres traitements complémentaires, comme une dénitrification.

Selon l'invention, le flux d'eau surchauffée et/ou de vapeur 4, produit par l'échangeur 101, est réparti en deux fractions distinctes, à savoir une fraction principale 6, qui, selon une des caractéristiques de l'invention, représente entre 80% et 98% en masse du flux 4 et qui est envoyée vers une unité de production d'électricité 301, et une fraction restante 5, qui est envoyée vers un réacteur d'activation 401.

Selon l'invention, l'unité de production d'électricité 301 est constituée par un générateur à cycle de Rankine à fluide organique, couramment appelé générateur ORC. Cette unité 301, qui est d'une technologie connue en soi, produit de l'électricité en fonctionnant selon un cycle de Rankine, à partir d'une source froide, ainsi que d'une source chaude à une température relativement basse, et en utilisant fluide organique. Selon l'invention, la source chaude de l'unité 301 est constituée par la fraction principale 6 du flux d'eau surchauffée et/ou de vapeur 4, cette fraction principale 6 entrant dans l'unité 301, à une température comprise entre 120 et 220°C. La source froide de l'unité 301 est référencée 13 : elle est constituée soit par de l'air, soit par un circuit d'eau froide, qui est ouvert ou qui utilise une tour d'évaporation. L'efficacité de production d'énergie électrique par l'unité 301, que l'on peut qualifier de rendement de cette unité 301, dépend des niveaux de température, ainsi que de la nature du fluide organique. Ce rendement est typiquement compris entre 8 et 17%.

Selon l'invention, l'unité 301 produit de l'électricité 1001 qui, comme indiqué par les flèches en pointillés sur la figure 1, peut avantageusement alimenter le réseau électrique de l'installation et/ou être utilisée localement par les consommateurs électriques du traitement des fumées 1. Il est ainsi possible d'assurer l'autosuffisance électrique des équipements 201 et 401 décrits jusqu'ici, de leurs annexes respectives, ainsi que d'un ventilateur de tirage des fumées 501, qui, comme sur la figure 1, est typiquement agencé en aval du séparateur gaz-solides 201, mais qui en variante non représentée, pourrait être agencé davantage en amont le long de la gaine de cheminement des fumées à traiter.

On notera que, bien que non représentée sur la figure 1, la sortie de la source chaude, à savoir la fraction de flux 6 après que cette dernière ait abandonné sa chaleur en traversant l'unité 301, est par exemple retournée à une bâche à eau, ou bien est réintroduite dans l'échangeur 101. De même, la sortie de la source froide associée à l'unité 301 n'est pas représentée sur la figure 1.

Comme représenté à la figure 1, la fraction restante 5 du flux d'eau surchauffée et/ou de vapeur 4 est susceptible de transiter par un ballon de flash 101' avant d'atteindre le réacteur d'activation 401. Plus précisément, lorsque cette fraction restante 5 est constituée d'eau surchauffée exclusivement ou bien d'un mélange d'eau surchauffée et de vapeur, le flux partiellement liquide, correspondant à cette fraction restante 5, transite effectivement par le ballon de flash 101' : ce ballon de flash 101', situé en amont du réacteur d'activation 401, est conçu pour, par détente, produire de la vapeur vive 5.1 qui présente une température comprise entre 100 et 150°C et qui alimente le réacteur d'activation 401. Le reliquat d'eau liquide 5.2, sortant du ballon de flash 101', est évacué ou recyclé.

Lorsque la fraction restante 5 est constituée exclusivement de vapeur d'eau, le flux gazeux correspondant est directement introduit dans le réacteur d'activation 401, sans mise en oeuvre du ballon de flash 101'. Autrement dit, dans ce cas de figure, le flux gazeux précité constitue un flux similaire au flux 5.1, tandis que le flux 5.2 n'existe pas.

Dans les deux cas, la vapeur, sous forme gazeuse, alimentant le réacteur d'activation 401 représente entre 50 et 500 kg/h pour 100 000 Nm³/h de fumées 1.

En plus de cette vapeur, le réacteur d'activation 401 est alimenté par une fraction 10 des résidus solides 8 collectés par le séparateur gaz-solides 201. Selon une caractéristique préférentielle de l'invention, la fraction 10 représente entre 40% et 95% des résidus collectés 8, le reste de ces résidus étant extrait de l'installation, comme indiqué par la référence 9.

Le réacteur d'activation 401 permet d'effectuer une réactivation des résidus précités, de manière à les réutiliser efficacement et donc d'assurer globalement un ratio stoechiométrique faible. Le ratio stoechiométrique peut être défini comme le rapport molaire de la quantité de réactif de neutralisation, nécessaire pour capturer la totalité des polluants acides présents dans les fumées 1. Ce ratio stoechiométrique est donc dicté par la chimie. Selon l'invention, les résidus réactivés 12, sortant du réacteur d'activation 401, sont avantageusement recyclés dans les fumées à épurer, en étant réintroduits dans la gaine véhiculant ces fumées, en amont du séparateur gaz-solides 201. Dans l'exemple montré à la figure 1, ces résidus réactivés 12 sont d'ailleurs introduits en amont de l'échangeur 10. A titre de variante non représentée, leur réintroduction peut être prévue entre l'échangeur 101 et le séparateur gaz-solides 201.

L'invention apporte donc un triple bénéfice et de manière intégrée.

D'une part, les fumées à traiter 1 sont significativement refroidies, en l'occurrence d'au moins 20°C, par l'échangeur 101, ce qui facilte la captation des polluants acides par le réactif de neutralisation, introduit dans ces fumées, cette captation se déroulant dans la gaine de cheminement des fumées, ainsi qu'au niveau du séparateur gaz-solides 201. Refroidir les fumées de la sorte permet de diminuer le ratio stoechiométrique et donc la consommation du réactif de neutralisation, ainsi que l'impact environnemental des résidus générés.

D'autre part, on utilise l'enthalpie soustraite aux fumées par ce refroidissement, pour produire de l'électricité par l'unité 301, assurant ainsi l'alimentation électrique au moins partielle des matériels de traitement des fumées. Le cas échéant, la mise en oeuvre de ces matériels de traitement devient autosuffisante lorsque la quantité d'électricité produite par l'unité 301 est suffisante. Dans tous les cas, le rendement énergétique de l'installation est sensiblement amélioré. Il est important de relever que la quantité d'eau surchauffée et/ou de vapeur d'eau, dont on a besoin pour le réacteur d'activation 401, autrement dit la quantité d'eau surchauffée et/ou de vapeur de la fraction 5, est très inférieure à celle du flux 4, c'est-à-dire très inférieure à la quantité d'eau surchauffée et/ou de vapeur d'eau qui est produite lorsqu'on refroidit les fumées 2 de manière assez significative pour produire un effet conforme à l'invention. En d'autres termes, le refroidissement des fumées, d'une valeur comprise entre 20°C et 100°C, permet de produire bien plus d'énergie qu'il n'en est nécessaire pour produire le flux 5 alimentant le réacteur d'activation 401, notamment pour produire entre 50 et 500 kg/h de vapeur d'eau pour 100 000 Nm³/h de fumées à traiter. Ainsi, par le biais de la fraction principale 6, l'invention permet de récupérer une quantité importante d'énergie, qui est non utile au traitement des fumées et qui aurait été perdue autrement.

Enfin, bien qu'en faible quantité comparativement au flux 4, la fraction 5 est utilisée pour augmenter la réactivité des résidus recirculés au niveau du réacteur d'activation 401. Sans ce réacteur 401 et l'action de la fraction 5, l'activité des résidus 12 serait considérablement moindre et le gain apporté par la recirculation des résidus solides 10 seraient beaucoup plus limité.

L'invention combine ainsi les trois effets décrits ci-dessus de manière intégrée pour disposer d'un procédé d'épuration performant, pouvant être autosuffisant électriquement.

### EXEMPLE :

Ci-après, on détaille un exemple de mise en oeuvre de l'installation de la figure 1.

Selon cet exemple, les fumées 1 sont issues d'un incinérateur de déchets ménagers et sont disponibles, en entrée de l'échangeur 101 constitué d'un faisceau tubulaire situé dans la gaine de cheminement des fumées, à une température de 200°C, avec un flux de 100 000 Nm³/h, soit environ 126 000 kg/h. L'échangeur précité échange 1,95 MW et refroidit les fumées à 150°C, soit un refroidissement d'une valeur de 50°C. La source chaude de l'unité de production de l'électricité 301 est fournie par un flux d'eau liquide sous pression, qui entre dans l'échangeur 101 à une température de 130°C et qui en sort à une température de 180°C, l'eau restant sous forme liquide. Environ 32500 kg/h d'eau sont ainsi utilisés en entrée de l'échangeur 101. La fraction principale 6, qui forme la source chaude entrante de l'unité de production de l'électricité 301, représente un débit de 31200 kg/h. La fraction restante 5 est introduite dans le ballon de flash 101' qui produit, sous forme du flux 5.1, 100 kg/h de vapeur vive à 140°C. L'unité de production d'électricité 301 produit 235 kW. Le ventilateur de tirage 501, principal consommateur d'électricité parmi tous les matériels de traitement des fumées, consomme environ 210 kW, l'énergie électrique restante étant suffisante pour alimenter en électricité les autres matériels consommateurs d'électricité, dont le séparateur gaz-solides 201, le réacteur d'activation 401 et leurs annexes. Autrement dit, selon cet exemple, le traitement de fumées est autosuffisant en électricité.

## Revendications

1. Procédé d'épuration de fumées et de production d'électricité,
dans lequel des fumées à épurer (1) sont envoyées successivement dans un échangeur de chaleur (101), qui refroidit ces fumées d'au moins 20°C et d'au plus 100°C et qui produit un flux d'eau surchauffée et/ou de vapeur d'eau (4), puis dans un séparateur gaz-solides (201),
dans lequel une fraction principale (6) du flux d'eau surchauffée et/ou de vapeur d'eau (4), qui en représente entre 80% et 98% en masse, est introduite, à une température comprise entre 120°C et 220°C, dans une unité de production d'électricité (301) fonctionnant selon un cycle de Rankine à fluide organique et y est utilisée comme source chaude entrante pour produire de l'électricité, et
dans lequel la fraction restante (5) du flux d'eau surchauffée et/ou de vapeur d'eau (4) est envoyée vers un réacteur d'activation (401) qui est alimenté au moins par une fraction recirculée (10) de résidus solides (8) collectés par le séparateur gaz-solides (201).

2. Procédé suivant la revendication 1, dans lequel le réacteur d'activation (401) est alimenté avec 50 à 500 kg/h de vapeur d'eau, issue du flux d'eau surchauffée et/ou de vapeur d'eau (4), pour 100 000 Nm³/h de fumées à épurer (1).

3. Procédé suivant l'une des revendications 1 ou 2, dans lequel, lorsque la fraction restante (5) du flux d'eau surchauffée et/ou de vapeur d'eau (4) est constituée exclusivement de vapeur, cette fraction restante alimente directement le réacteur d'activation (401).

4. Procédé suivant l'une des revendications 1 ou 2, dans lequel, lorsque la fraction restante (5) du flux d'eau surchauffée et/ou de vapeur d'eau (4) est constituée d'eau surchauffée exclusivement ou d'un mélange d'eau surchauffée et de vapeur d'eau, cette fraction traverse un ballon de flash (101') pour produire de la vapeur vive (5.1) qui alimente le réacteur d'activation (401).

5. Procédé selon l'une quelconque des revendications précédentes, dans lequel la source chaude est constituée d'eau surchauffée issue du flux d'eau surchauffée et/ou de vapeur d'eau (4).

6. Procédé suivant l'une quelconque des revendications précédentes, dans lequel l'électricité produite par l'unité de production d'électricité (301) alimente au moins un ventilateur (501) de tirage des fumées à traiter (1).

7. Procédé suivant la revendication 6, dans lequel l'électricité produite par l'unité de production d'électricité (301) alimente également le séparateur gaz-solides (201) et le réacteur d'activation (401) ainsi que, le cas échéant, un ou plusieurs autres matériels de mise en oeuvre du procédé, assurant ainsi une autosuffisance électrique pour la mise en oeuvre du procédé.

8. Procédé selon l'une quelconque des revendications précédentes, dans lequel la source chaude sortant de l'unité de production d'électricité (301) est envoyée dans une bâche à eau.

9. Procédé selon l'une quelconque des revendications précédentes, dans lequel les résidus réactivés (12) sortant du réacteur d'activation (401) sont réintroduits dans les fumées à traiter (1), en amont du séparateur gaz-solides (201).

10. Installation d'épuration de fumées et production d'électricité, comportant :
- un échangeur de chaleur (101), qui est alimenté avec des fumées à épurer (1) et qui est adapté pour refroidir ces fumées d'au moins 20°C et d'au plus 100°C, en produisant un flux d'eau surchauffée et/ou de vapeur d'eau (4),
- un séparateur gaz-solides (201) qui est alimenté avec les fumées (3) sortant de l'échangeur de chaleur (101),
- une unité de production d'électricité (301) fonctionnant selon un cycle de Rankine à fluide organique, qui est alimentée par une fraction principale (6) du flux d'eau surchauffée et/ou de vapeur d'eau (4), représentant entre 80% et 98% en masse du flux d'eau surchauffée et/ou de vapeur d'eau (4) et ayant une température comprise entre 120°C et 220°C, et
- un réacteur d'activation (401) qui est alimenté au moins avec une fraction recirculée (10) de résidus solides (8) collectés par le séparateur gaz-solides (201) et avec de la vapeur issue de la fraction restante (5) du flux d'eau surchauffée et/ou de vapeur d'eau (4).

## Patentansprüche

1. Verfahren zur Reinigung von Rauchgasen und zur Stromerzeugung,
wobei die zu reinigenden Rauchgase (1) nacheinander in einen Wärmetauscher (101), welcher diese Rauchgase um mindestens 20 °C und um höchstens 100 °C kühlt und welcher einen Strom von überhitztem Wasser und/oder von Wasserdampf (4) erzeugt, und dann in einen Gas-Feststoff-Separator (201) geführt werden,
wobei ein Hauptanteil (6) des Stroms von überhitztem Wasser und/oder Wasserdampf (4), welcher zwischen 80 Gewichts-% und 98 Gewichts-% hat, bei einer Temperatur zwischen 120 °C und 220 °C, in eine Stromerzeugungsanlage (301), welche gemäß einem Organischen-Fluid-Clausius-Rankine-Kreisprozess funktioniert, eingeführt wird, und dort als eintretende Wärmequelle zur Stromerzeugung verwendet wird, und
wobei der verbleibende Teil (5) des Stroms von überhitztem Wasser und/oder Wasserdampf (4) zu einem Aktivierungsreaktor (401) hingeleitet wird, welchem mindestens ein rückgeführter Anteil (10) von festen Rückständen (8) zugeführt wird, welche durch den Gas-Feststoff-Separator (201) gesammelt werden.

2. Verfahren nach Anspruch 1, wobei dem Aktivierungsreaktor (401) mit 50 bis 500 kg / Stunde Wasserdampf zugeführt wird, welcher aus dem Strom von überhitztem Wasser und/oder Wasserdampf (4) stammt, bezogen auf 100 000 Nm³ / Stunde von zu reinigenden Rauchgasen (1).

3. Verfahren nach einem der Ansprüche 1 oder 2, wobei, wenn der verbleibende Teil (5) von überhitztem Wasser und/oder Wasserdampf (4) ausschließlich von Dampf gebildet ist, dieser verbleibende Teil unmittelbar dem Aktivierungsreaktor (401) zugeführt wird.

4. Verfahren nach einem der Ansprüche 1 oder 2, wobei, wenn der verbleibende Teil (5) von überhitztem Wasser und/oder Wasserdampf (4) von ausschließlich überhitztem Wasser oder einem Gemisch von überhitztem Wasser und Wasserdampf gebildet ist, dieser Teil einen Entspannungsbehälter (101') durchdringt, um Frischdampf (5.1) zu erzeugen, welcher den Aktivierungsreaktor (401) zugeführt wird.

5. Verfahren nach einem der vorhergehenden Ansprüche, wobei die Wärmequelle von überhitztem Wasser gebildet ist, welches aus dem Strom von überhitztem Wasser und/oder Wasserdampf (4) stammt.

6. Verfahren nach einem der vorhergehenden Ansprüche, wobei der Strom, welcher durch die Stromerzeugungsanlage (301) erzeugt wird, mindestens einem Ventilator (501) zur Absaugung der zu reinigenden Rauchgase zugeführt wird.

7. Verfahren nach Anspruch 6, wobei der Strom, welcher durch die Stromerzeugungsanlage (301) erzeugt wird, auch dem Gas-Feststoff-Separator (201) und dem Aktivierungsreaktor (401) sowie gegebenenfalls einer oder mehreren anderen Anlagen zur Durchführung des Verfahrens zugeführt wird, wodurch eine elektrische Selbstversorgung für die Durchführung des Verfahrens gewährleistet wird.

8. Verfahren nach einem der vorhergehenden Ansprüche, wobei die Wärmequelle, welche aus der Stromerzeugungsanlage (301) ausgelassen wird, in einen Wasserbehälter geleitet wird.

9. Verfahren nach einem der vorhergehenden Ansprüche, wobei die reaktivierten Rückstände (12), welche aus dem Aktivierungsreaktor (401) ausgelassen werden, in die zu reinigenden Rauchgase (1) vor dem Gas-Feststoff-Separator (201) wieder eingeführt werden.

10. Anlage zur Reinigung von Rauchgasen und zur Stromerzeugung, aufweisend:
- einen Wärmetauscher (101), welchem zu reinigenden Rauchgasen (1) zugeführt werden und welcher angepasst ist, um diese Rauchgase um mindestens 20 °C und um höchstens 100 °C zu kühlen, wobei ein Strom von überhitztem Wasser und/oder Wasserdampf (4) erzeugt wird,
- einen Gas-Feststoff-Separator (201), welchem die Rauchgase (3) zugeführt werden, welche aus dem Wärmetauscher (101) ausgelassen werden,
- eine Stromerzeugungsanlage (301), welche gemäß einem Organischen-Fluid-Clausius-Rankine-Kreisprozess funktioniert, welcher ein Hauptteil (6) des Stroms von überhitztem Wasser und/oder Wasserdampf (4) zugeführt wird, welcher zwischen 80 Gewichts-% und 98 Gewichts-% des Stroms von überhitztem Wasser und/oder Wasserdampf (4) hat, und welcher eine Temperatur zwischen 120 °C und 220°C hat, und
- einen Aktivierungsreaktor (401), welchem mindestens ein rückgeführter Anteil (10) von festen Rückständen (8), welche von dem Gas-Feststoff-Separator (201) gesammelt werden, und Dampf, welcher aus dem verbleibenden Teil (5) des Stroms von überhitztem Wasser und/oder Wasserdampf (4) stammt, zugeführt werden.

## Claims

1. Method for flue gas purification and electricity generation,
in which flue gases to be purified (1) are sent successively into a heat exchanger (101), which cools these flue gases by at least 20°C and by at most 100°C and which produces a flow of superheated water and/or water vapour (4), then into a gas-solids separator (201),
in which a main fraction (6) of the flow of superheated water and/or water vapour (4) which represents between 80% and 98% by mass thereof, is introduced, at a temperature between 120°C and 220°C, into an electricity generation unit (301) which functions according to an organic fluid Rankine cycle and is used there as ingoing hot source in order to generate electricity, and
in which the remaining fraction (5) of the flow of superheated water and/or water vapour (4) is sent towards an activation reactor (401) which is fed at least with one recirculated fraction (10) of solid residues (8) collected by the gas-solids separator (201).

2. Method according to claim 1, in which the activation reactor (401) is fed with 50 to 500 kg/h of water vapour, which comes from the flow of superheated water and/or water vapour (4), per 100,000 Nm³/h of flue gases to be purified (1).

3. Method according to one of the claims 1 or 2, in which, when the remaining fraction (5) of the flow of superheated water and/or water vapour (4) comprises exclusively vapour, this remaining fraction feeds the activation reactor (401) directly.

4. Method according to one of the claims 1 or 2, in which, when the remaining fraction (5) of the flow of superheated water and/or water vapour (4) comprises superheated water exclusively or a mixture of superheated water and water vapour, this fraction passes through a flash receiver (101') in order to produce live steam (5.1) which feeds the activation reactor (401).

5. Method according to any one of the preceding claims, in which the hot source comprises superheated water coming from the flow of superheated water and/or water vapour (4).

6. Method according to any of the preceding claims, in which the electricity generated by the electricity generation unit (301) feeds at least one fan (501) for extracting flue gases to be treated (1).

7. Method according to claim 6, in which the electricity generated by the electricity generation unit (301) likewise feeds the gas-solids separator (201) and the activation reactor (401) and also, if necessary, one or more other items of equipment for implementing the method, thus ensuring electrical self-sufficiency for implementing the method.

8. Method according to any of the preceding claims, in which the hot source leaving the electricity generation unit (301) is sent into a water tank.

9. Method according to any of the preceding claims, in which the reactivated residues (12) leaving the activation reactor (401) are reintroduced into the flue gases to be treated (1), upstream of the gas-solids separator (201).

10. Plant for flue gas purification and electricity generation, comprising:
- a heat exchanger (101) which is fed with the flue gases to be purified (1) and which is adapted to cool these flue gases by at least 20°C and by at most 100°C, while producing a flow of superheated water and/or water vapour (4),
- a gas-solids separator (201) which is fed with the flue gases (3) leaving the heat exchanger (101),
- an electricity generation unit (301) which functions according to an organic fluid Rankine cycle which is fed by a main fraction (6) of the flow of superheated water and/or water vapour (4), representing between 80% and 98% by mass of the flow of superheated water and/or water vapour (4) and having a temperature between 120° and 220°C, and
- an activation reactor (401) which is fed at least with one recirculated fraction (10) of solid residues (8) collected by the gas-solids separator (201) and with steam coming from the remaining fraction (5) of the flow of superheated water and/or water vapour (4).
